# EUROPÄISCHE PATENTSCHRIFT

(11) **EP 1 038 050 B1**
(45) Veröffentlichungstag und Bekanntmachung des Hinweises auf die Patenterteilung: **12.01.2005**
(21) Anmeldenummer: 98966235.8
(22) Anmeldetag: 10.11.1998
(51) Int. Cl.: C23C 22/02, C09D 4/00

(54) **POLYMERISIERBARE CHROMFREIE ORGANISCHE COILBESCHICHTUNGEN**
POLYMERISABLE, CHROMIUM-FREE, ORGANIC COIL COATING MEDIA
ENDUCTION EN CONTINU DE BANDES PAR UN REVETEMENT ORGANIQUE, EXEMPT DE CHROME ET POLYMERISABLE

(30) Priorität: 19.11.1997 DE 19751153
(43) Veröffentlichungstag der Anmeldung: 27.09.2000
(73) Patentinhaber: Henkel Kommanditgesellschaft auf Aktien, 40191 Düsseldorf (DE)
(72) Erfinder: SCHIEFERSTEIN, Ludwig, D-40882 Ratingen (DE); GORZINSKI, Manfred, D-40227 Düsseldorf (DE); KÜPPER, Stefan, D-40721 Hilden (DE); FISCHER, Herbert, D-40229 Düsseldorf (DE)
(86) Internationale Anmeldenummer: PCT/EP1998/007161
(87) Internationale Veröffentlichungsnummer: WO 1999/025897

(56) Entgegenhaltungen:
- EP-A- 0 648 822
- WO-A-89/01952
- DE-A- 2 943 566
- US-A- 3 671 295

## Beschreibung

Die vorliegende Erfindung betrifft polymerisierbare Zusammensetzungen zur organischen Beschichtung von metallischen Werkstoffen sowie Verfahren zu deren Herstellung und ein Verfahren zur Coilbeschichtung von Stahl.

In der metallverarbeitenden Industrie, insbesondere beim Bau von Kraftfahrzeugen und im Apparate- oder Gerätebau müssen die metallischen Bestandteile der Erzeugnisse vor Korrosion geschützt werden. Nach herkömmlichen Stand der Technik werden dabei die Bleche im Walzwerk zunächst mit Korrosionsschutzölen beschichtet und vor der Verformung und dem Stanzen ggf. mit Ziehfetten beschichtet. Anschließend werden dann im Fahrzeugbau bzw. im Gerätebau die für die Karosserie, Karosserieteile oder Geräte entsprechend geformten Blechteile ausgestanzt und unter Verwendung von besagten Ziehfetten oder -ölen im Tiefziehverfahren verformt. Daran schließt sich im allgemeinen ein Fügen durch Schweißen und/oder Bördeln und/oder Kleben an, gefolgt von aufwendigen Reinigungsschritten, woran sich eine korrosionsschützende Oberflächenvorbehandlung anschließt. Diese korrosionsschützende Oberflächenvorbehandlung besteht dabei aus einer Phosphatierung und in der Regel Chromatierung, worauf die erste Lackschicht, häufig mittels Elektrotauchlackierung auf die Bauteile aufgebracht wird. In der Regel folgt dieser ersten Elektrotauchlackierung, insbesondere im Falle von Automobilkarosserien, die Aufbringung mehrerer weiterer Lackschichten.

In neuerer Zeit setzen sich verstärkt sogenannte Coil-Coating-Verfahren für die Vorbehandlung von Stahlblechen durch, weil das Coil-Coating-Verfahren viele Arbeitsabläufe vereinfacht. Hierbei wird in einem kontinuierlichen Verfahren die Vorbehandlung und ggf. auch eine organische Beschichtung bereits auf dem bandförmigen Stahl im Walzwerk vorgenommen. Bei dieser Bandbeschichtung kann erheblich Energie eingespart werden. Es sind außerdem weniger Chemikalien und Frischwasser nötig und der Abwasseranfall wird verringert. Für den verbesserten Korrosionsschutz der Stahlbleche stehen heute eine Vielzahl von Stahlbandoberflächen zur Verfügung wie z.B. schmelztauchverzinkt, elektrolytisch verzinkt, galvannealed, aluminiert. Die derart metallisch veredelten Bänder erhalten direkt nach der Herstellung einen Korrosionsschutz. Wesentliche Maßstäbe für die Qualität der aus diesen Stahlbändern erzeugten Fahrzeuge oder Geräte sind gute Lackhaftung und guter Korrosionsschutz. Bei den konventionellen Vorbehandlungsverfahren im Coil-Coating ist der Einsatz von Chrom-haltigen Produkten zur Erhöhung von Korrosionsschutz und Lackhaftung bislang unverzichtbar. So sind auch bei der Verwendung von Verfahren wie der alkalischen Passivierung, der Zink- oder Eisenphosphatierung von Stahl oder verzinktem Stahlband Chromsäure-haltige Produkte zur Nachpassivierung notwendig, um den gewünschten Korrosionsschutz zu erzielen. Die beim Einsatz dieser Verfahren anfallenden Abwässer müssen aufwendig aufgearbeitet und entsorgt werden. Der Umgang mit Chrom(VI)-haltigen Chemikalien bei der Produktion der Vorbehandlungsprodukte, ihrem Transport und ihrer Anwendung erfordert außerdem besondere Vorsichtsmaßnahmen.

Ein erster Schritt zur Abwasserentlastung war die Entwicklung von Produkten auf Chromsäurebasis, die sich in einem neuen Applikationsverfahren anwenden lassen, bei dem Spülbäder entfallen, dieses Verfahren ist unter der Bezeichnung "no-rinse" bekannt geworden.

In jüngerer Zeit wurden chromfreie no-rinse-Vorbehandlungsverfahren entwickelt, diese basieren auf wässrig sauren Lösungen von fluoridhaltigen Titansalzen sowie organischen Polymeren als Hauptbestandteile. Darüberhinaus können Metallionen wie Mangan, Kobalt, Nickel oder Zink sowie Phosphat und Silikate darin enthalten sein. Als organische Bestandteile werden chelatisierende Polymere wie Polyacrylate oder Polyvinylphenolderivate verwendet. Eine wesentliche Aufgabe dieser chelatisierenden Polymeren besteht darin, mit den Metallionen Komplexe zu bilden, die in der wässrigen Phase stabil sind. Diese chromfreien Systeme werden beispielsweise in der EP 178020, EP 469034 oder EP 555383 beschrieben. Die letztgenannten Verfahren ermöglichen zwar die Verwendung chromfreier Systeme bei gutem Korrosionsschutz, nachteilig ist jedoch, daß sie nur aus stark saurer Lösung angewendet werden können und eine sehr hohe Fluoridionen-Konzentration erfordern.

Es besteht also Bedarf Vorbehandlungsmittel und Vorbehandlungsverfahren zu entwickeln, die die chromfreie Vorbehandlung bei gutem Korrosionsschutz unter Vermeidung starker Säuren und hoher Fluoridkonzentration ermöglichen. Dabei sollen die Bestandteile vorzugsweise homogen in der Zusammensetzung verteilt sein um Entmischungen während Herstellung, Transport, Lagerung und Anwendung zu vermeiden.

Die erfindungsgemäße Lösung der Aufgabe ist den Patentansprüchen zu entnehmen. Sie beinhaltet im wesentlichen die Bereitstellung polymerisierbarer Zusammensetzungen zur organischen Beschichtung von metallischen Werkstoffen, die mindestens ein Titan-, Mangan- und/oder Zirkoniumsalz einer olefinisch ungesättigten polymerisierbaren Carbonsäure, mindestens ein weiteres olefinisch ungesättigtes Comonomer sowie mindestens einen Initiator zur radikalischen Polymerisation in einem nicht wässrigen System enthalten.

Ein weiterer Gegenstand der vorliegenden Erfindung ist ein Verfahren zur Herstellung der vorgenannten Zusammensetzungen zur organischen Beschichtung sowie ein Verfahren zur Coilbeschichtung von Bandstählen.

Als olefinisch ungesättigte polymerisierbare Carbonsäure zur Generierung der entsprechenden Titan-, Mangan- oder Zirkoniumsalze eignen sich dabei alle an sich bekannten olefinisch ungesättigten Carbonsäuren die homo- und/oder copolymerisierbar sind: nämlich Acrylsäure, Methacrylsäure, Itaconsäure, Crotonsäure, Maleinsäure, Maleinsäurehalbester, d.h. Ester der Maleinsäure bei denen eine Carboxylgruppe mit einem Alkylrest verestert ist, Fumarsäure oder Fumarsäurehalbester, reaktive carboxylgruppenhaltige Makromonomere oder Mischungen der vorgenannten Säuren. Unter "Makromonomer" werden im Sinne dieser Erfindung Oligomere oder Polymere mit funktionellen Endgruppen verstanden, über die Polymerisationsreaktionen ablaufen können. Sie sind also prinzipiell makromolekulare Monomere. In der Regel enthalten diese Makromonomere als Endgruppen ungesättigte C, C-Bindungen, d.h. Vinyl-, Acryl-, Methacryl- oder Styrylgruppen.

Zusätzlich kann die Zusammensetzung weitere copolymerisierbare Comonomere enthalten wie Hydroxyethylacrylat, Hydroxyethylmethacrylat, Hydroxypropylacrylat, Hydroxypropylmethacrylat, Hydroxbutylacrylat, Hydroxybutylmethacrylat, C₁-C₈-Alkylacrylate oder - methacrylate sowie eine oder mehrere der vorgenannten olefinisch ungesättigten Carbonsäuren in freier Form, d.h. nicht in Salzform. Ein Teil der vorgenannten hydroxyfunktionellen Comonomeren kann auch durch Polyethylenglykol-Halbester der olefinisch ungesättigten polymerisierbaren Carbonsäuren ersetzt werden.

Weiterhin enthalten die erfindungsgemäßen Zusammensetzungen mindestens einen Initiator zur Auslösung der radikalischen Polymerisation. Die Aushärtung der Beschichtung erfolgt dabei durch thermische, Photo- und/oder Elektronenstrahlpolymerisation. Besonders bevorzugt ist die Photopolymerisation, so daß die für die Photopolymerisation geeigneten Beschichtungszusammensetzungen einen Photoinitiator enthalten. Hierfür eignen sich eine Vielzahl kommerziell erhältlicher Photoinitiatoren. Die Zusammensetzungen enthalten Photoinitiatoren in Mengen zwischen 0,1 und 20 Gew.-%, vorzugsweise zwischen 2 und 12 Gew.-%, besonders bevorzugt zwischen 3 und 8 Gew.-%.

Beispiele für geeignete Photoinitiatoren sind Benzoine, Benzoinalkylether, Benzilketale wie z.B. Benzildimethylketal, Acetophenonderivate wie z.B. Dialkylacetophenone oder auch Dichlor- und Trichloracetophenone, Beispiele für kommerziell erhältliche Photoinitiatoren der vorgenannten Art sind Irgacure 651 bzw. 907 der Firma Ciba Geigy.

Neben den vorgenannten Photoinitiatoren oder anstelle dieser können die erfindungsgemäßen Zusammensetzungen auch frei radikalische Initiatoren vom Typ der Peroxide, z.B. Benzylperoxid oder Azoverbindungen z.B. 2,2'-Azobisisobutylnitril enthalten. Im Falle der ausschließlich thermisch durchgeführten Polymerisation enthalten die Zusammensetzungen selbstverständlich keinen Photoinitiator.

Die erfindungsgemäßen polymerisierbaren Zusammensetzungen enthalten solche Mengen des Titan-, Mangan- und/oder Zirkoniumsalzes der olefinisch ungesättigten Carbonsäure, daß in der Beschichtung ein Metallgehalt von 0,5 bis 15, bevorzugt von 1 bis 8 % resultiert, sowie bis zu 90 Gew.-% eines oder mehrerer der Comonomeren und zwischen 2 und 10 % des Initiators.

Wenn Alkylacrylate und/oder Alkylmethacrylate als Comonomere verwendet werden, so sollten insbesondere die längerkettigen Alkylverbindungen in untergeordneter Menge zugegen sein, da sonst die Zusammensetzungen langfristig nicht homogen bleiben. Außerdem wird ein geringerer Korrosionsschutz derartiger Zusammensetzungen beobachtet. In der Regel sollte der Anteil Alkylacrylaten insbesondere beispielsweise das 2-Ethylhexylacrylat deutlich weniger als 50 % der carboxy- und/oder hydroxyfunktionellen Comonomeren betragen.

Polymerisierbare Zusammensetzungen von Titan-, Mangan- oder Zirkoniumsalzen der Acrylsäure bzw. Methacrylsäure mit anderen Acrylat- bzw. Methacrylatcomonomeren sind im Prinzip bereits bekannt. So beschreibt die DE-A-2943566 ein Verfahren zur Herstellung eines ionisch vernetzten Acrylkunststoffes, bei denen das Monomerengemisch 0,1 bis 50 Gew.-% mindestens eines Metallsalzes einer ungesättigten polymerisierbaren Carbonsäure enthält. Diese Zusammensetzungen werden in Substanz thermisch polymerisiert. Es wird offenbart, daß derartige Polymere eine erhöhte Erweichungstemperatur und eine verbesserte Beständigkeit gegen thermische Zersetzung im Vergleich zu unvernetzten Polymeren haben.

Die WO 89/01952 beschreibt ein farbloses transparentes Polymermaterial, vorzugsweise für optische Zwecke, hergestellt durch radikalische Polymerisation eines Monomerengemisches, das einen Mengenanteil von 20 bis Gew.-% einer Zirkonium(IV)-Acrylverbindung enthält.

Die EP-A-518609 beschreibt einen oberflächenstrukturierten Film, der auf einem polymeren Substrat aufgebracht wird und aus einer gehärteten Beschichtung besteht. Für diese lösungsmittelhaltigen Beschichtungen werden Comonomerzusammensetzungen vorgeschlagen, die unter anderem Metallacrylate, speziell genannt wird Zinkdiacrylat, enthalten und die photopolymerisiert werden.

EP-A-648822 offenbart eine polymerisierbare Zusammensetzung, die ein Titansalz der Acrylsäure oder Methacrylsäure und weiterhin ein olefinisch ungesättigtes Comonomer, wie zum Beispiel ein Mono- oder Polyacrylat sowie einen Initiator zur radikalischen Polymerisation enthält. Diese Schrift erwähnt keine Verwendung von carboxylgruppenhaltigen Comonomeren oder hydroxylgruppenhaltigen Comonomeren.
Weiterhin schlägt diese Schrift vor, daß die strahlungshärtbare Zusammensetzung vorzugsweise zwischen 5 und 25 Gew.-% Lösungsmittel enthalten soll. Coil-Beschichtungen werden in dieser Schrift nicht offenbart.

Keine der vorgenannten Schriften offenbart polymerisierbare Zusammensetzungen zur organischen Coilbeschichtung von metallischen Werkstoffen der erfindungsgemäßen Art.

Die erfindungsgemäßen Zusammensetzungen können weiterhin zusätzliche Additive wie z.B. Gleitmittel enthalten um das spätere Verformen der so beschichteten Stahlmaterialien zu erleichtern. Wesentlich dabei ist jedoch, daß derartige Additive den Vernetzungsprozeß der Monomeren nicht beeinträchtigen.

Das polymerisationsfähige organische Medium ist so polar, daß die Reaktionen der salzförmigen Metallkomponenten an der Stahloberfläche möglich sind. Es wird angenommen, daß diese Reaktion der Titan-, Mangan- und/oder Zirkoniumsalze an der Stahloberfläche bzw. an der verzinkten Stahloberfläche den Korrosionschutz bewirken. Daher ist es umso wichtiger, daß die erfindungsgemäßen Zusammensetzungen das Einbringen von sehr viel korrosionsschützendem Metall mit wenig "Ballast", d.h. nicht zum Korrosionsschutz beitragende Bestandteile, ermöglicht. Gleichzeitig wird das Komplexierungsmittel für das Metall samt dem Metall zum Bindemittelbestandteil der Beschichtung der Stahloberfläche.

Zur Herstellung der erfindungsgemäßen Zusammensetzungen kann man auf zwei verschiedene Arten vorgehen. Entweder werden die Titan-, Mangan- und/oder Zirkoniumsalze der olefinisch ungesättigten polymerisierbaren Carbonsäure in einem separaten Schritt hergestellt und in den restlichen Comonomeren anschließend aufgelöst. Daran schließt sich die Zugabe des oder der Initiatoren an.

In einem besonders bevorzugten Verfahren werden die Titan-, Manganund/oder Zirkoniumsalze der ungesättigten Carbonsäure in situ erzeugt, d.h. es werden die entsprechenden Carbonsäuren vorgelegt und die entsprechenden Metalloxide, Metallhydroxide, Metallalkoholate, Metallcarbonate und/oder β-Dicarbonylverbindungen der Metalle in der oder den Carbonsäuren gelöst, wobei diese ggf. erwärmt werden. Gegebenenfalls können die dabei frei werdenden Alkohole bzw. β-Dicarbonylverbindungen destillativ, ggf. im Vakuum aus der Zusammensetzung entfernt werden. Sie können jedoch auch in der Zusammensetzung verbleiben.

Die erfindungsgemäßen Zusammensetzungen sind zwar im wesentlichen frei von organischen Lösungsmitteln. Dies bedeutet jedoch nicht, daß nicht ggf. geringe Mengen an Alkoholen, β-Dicarbonylverbindungen oder anderen flüchtigen organischen Bestandteilen aus dem Herstellungsprozess in geringen Mengen in der Zusammensetzung anwesend sein können.

Üblicherweise werden die erfindungsgemäßen Zusammensetzungen auf das Stahlblech in einer ausreichenden Menge aufgebracht um Schichtstärken zwischen 0,5 und 10 µm, vorzugsweise zwischen 1 und 3 µm zu erzielen.

Die nachfolgenden Beispiele sollen die Erfindung näher erläutern. Bei den Zusammensetzungen sind dabei alle Mengenangaben Gewichtsprozent, wenn nicht anders angegeben.

### A) Herstellung der polymerisierbaren Beschichtungsmischungen

### Beispiel 1

14,3 g Titanisopropylorthotitanat in Isopropanol, 14,5 g Acrylsäure und 66,9 g Hydroxiethylacrylat werden bei Raumtemperatur zu einer homogenen Beschichtungszusammensetzung gemischt.

### Beispiel 2:

40,9 g Maleinsäureanhydrid suspendiert in 48,5 g Hydroxiethylacrylat werden auf 90°C erhitzt und eine Stunde bei dieser Temperatur gerührt. Dann werden innerhalb von 10 Minuten 16,3 g Titanisopropylorthotitanat zugetropft. Anschließend wird im Vakuum bei ca. 50 mbar 5,7 g freigesetztes Isopropanol abdestilliert.

### Beispiel 3:

37,6 g Maleinsäureanhydrid suspendiert in 44,7 g Hydroxiethylacrylat werden auf 90°C erhitzt und eine Stunde bei dieser Temperatur gerührt. Dann werden innerhalb von 10 Minuten 27,3 g Titanisopropylorthotitanat zugetropft. Anschließend wird im Vakuum bei ca. 50 mbar 9,6 g freigesetztes Isopropanol abdestilliert.

### Beispiel 4:

23,6 g Maleinsäureanhydrid suspendiert in 70,1 g Hydroxiethylacrylat werden auf 60°C erhitzt und eine Stunde bei dieser Temperatur gerührt. Dann werden innerhalb von 10 Minuten 17,1 g Titanisopropylorthotitanat zugetropft. Anschließend wird im Vakuum bei ca. 100 mbar 10,8 g freigesetztes Isopropanol abdestilliert.

### Beispiel 5:

19,6 g Maleinsäureanhydrid suspendiert in 46,8 g Hydroxipropylmethacrylat werden auf 60°C erhitzt und eine Stunde bei dieser Temperatur gerührt. Zu der Mischung werden 12,0 g Pentaerythittriacrylat gegeben.
Nach Abkühlen auf unter 35 °C werden innerhalb von 10 Minuten 23,4 g einer 70 %igen Lösung von Zirkonisopropylorthotitanat in Isopropanol zugetropft.
Die Mischung wird durch Rühren homogenisiert und umgehend appliziert.

### B) Applikation und Aushärtung

Vor der Beschichtung werden zu den polymerisierbaren Mischungen jeweils 5 Gew. % Benzyldimethylketal bezogen auf Bindemittelgehalt als Photoinitiator hinzugegeben und durch Rühren homogenisiert.
Die Beschichtungszusammensetzungen werden mittels Lackschleuder je nach Viskosität 10 Sekunden bei 500 - 1000 UpM in einer Schichtdicke von 1 - 2 µm auf das zu beschichtende Blech aufgebracht und mit einer UV-Lampe, Typ Ultra Jet 100 mit einer Leistung von 100 Watt pro Zentimeter Leuchtlänge drei Minuten lang bestrahlt.
Anschließend wird das beschichtete Blech für 24 Stunden einem Salzsprühtest nach DIN 5002155 unterworfen.

### Ergebnis:

Sowohl auf elektrolytisch wie im Schmelztauchverfahren ("Galvalume", Galfan") verzinktem Stahlblech wird keinerlei Korrosion beobachtet.
Formulierungen ohne Metallzusatz zeigen nach dieser Zeit großflächige Weißrostbildung bzw. Scharzfärbung.

Damit ist diese antikorrosiv wirkende Beschichtung in ihrem Leistungsniveau chromhaltigen Systemen ebenbürtig.

## Patentansprüche

1. Polymerisierbare Zusammensetzung zur organischen Coil-Beschichtung von metallischen Werkstoffen enthaltend
- mindestens ein Titan-, Mangan- und/oder Zirconiumsalz einer olefinisch ungesättigten polymerisierbaren Carbonsäure
- mindestens ein weiteres olefinisch ungesättigtes Comonomeres ausgewählt aus Acrylsäure, Methacrylsäure, Itaconsäure, Crotonsäure, Maleinsäure, Maleinsäurehalbester, Fumarsäure, Fumarsäurehalbester, reaktive carboxylgruppenhaltige Makromonomere, Hydroxyethyl(meth)acrylat, Hydroxypropyl(meth)acrylat, Hydroxybutyl(meth)acrylat, C₁ bis C₈-Alkyl(meth)acrylate oder deren Mischungen, wobei der Anteil an Alkyl(meth)acrylaten weniger als 50 % der Carboxy- und / oder hydroxyfunktionellen Comonomeren beträgt.
- mindestens einen Initiator zur radikalischen Polymerisation, wobei die Zusammensetzung im Wesentlichen frei ist von organischen Lösungsmitteln.

2. Zusammensetzung nach Anspruch 1 **dadurch gekennzeichnet, daß** mindestens ein Initiator durch Strahlung aktivierbar ist.

3. Verfahren zur Herstellung der Zusammensetzungen gemäß einem der vorhergehenden Ansprüche **dadurch gekennzeichnet, daß** die Monomeren ggf. unter Zusatz von Stabilisatoren unter Rühren miteinander bis zur Homogenität gemischt werden und anschließend der/die Initiatoren zugefügt werden.

4. Verfahren gemäß Anspruch 3 **dadurch gekennzeichnet, daß** das/die Titan-, Mangan- und/oder Zirkoniumsalz(e) der olefinisch ungesättigten Carbonsäure in situ erzeugt wird (werden), wobei die entsprechenden Metalloxide, - Hydroxide, -Alkoholate, -Carbonate und/oder -β-Dicarbonylverbindungen in der/den Carbonsäure(n) ggf. unter Erwärmen gelöst werden.

5. Verfahren zur Coil-Beschichtung von metallischen Werkstoffen, **gekennzeichnet durch** die folgenden wesentlichen Schritte
- Reinigen und Entfetten des Bandstahls,
- Spülen der Oberfläche,
- Beschichten der Oberfläche mit einer Zusammensetzung gemäß mindestens einem der vorhergehenden Ansprüche mit einer Schichtdicke von 0,1 bis 10 µm, vorzugsweise 0,5 bis 5 µm besonders bevorzugt 1 bis 3 µm,
- Aushärtung der Beschichtung **durch** thermische, Photo- und/oder Elektronenstrahl-Polymerisation.

6. Verfahren zur Coil-Beschichtung von elektrolytisch oder im Schmelztauchverfahren verzinktem Bandstahl, **gekennzeichnet durch** die folgenden wesentlichen Schritte
- Reinigen und Entfetten des Bandstahls,
- Spülen der Oberfläche,
- Beschichten der Oberfläche mit einer Zusammensetzung gemäß mindestens einem der vorhergehenden Ansprüche mit einer Schichtdicke von 0,1 bis 10 µm, vorzugsweise 0,5 bis 5 µm besonders bevorzugt 1 bis 3 µm,
- Aushärtung der Beschichtung **durch** thermische, Photo- und/oder Elektronenstrahl-Polymerisation.

## Claims

1. A polymerizable composition suitable for organic coil coating of metallic materials comprising
- at least one titanium, manganese and/or zirconium salt of an olefinically unsaturated polymerizable carboxylic acid,
- at least one additional olefinically unsaturated comonomer, selected from the group of acrylic acid, methacrylic acid, itaconic acid, crotonic acid, maleic acid, maleic acid semiesters, fumaric acid or fumaric acid semiesters, reactive carboxyfunctional macromonomers, hydroxyethyl acrylate, hydroxyethyl methacrylate, hydroxypropyl acrylate, hydroxypropyl methacrylate, hydroxybutyl acrylate, hydroxybutyl methacrylate, C₁₋₈ alkyl acrylates or methacrylates or mixtures thereof, whereby the amount of alkylacrylates and / or alkylmethacrylates is less than 50 % by weight of the carboxyfunctional and/or hydroxyfunctional comonomers,
- at least one radical polymerization initiator, whereby the composition is essentially free from organic solvents.

2. A composition as claimed in claim 1, **characterized in that** at least one initiator is activatable by radiation.

3. A process for the production of the compositions claimed in any of the preceding claims, **characterized in that** the monomers are mixed together by stirring, optionally in the presence of stabilizers, until a homogeneous mixture is obtained and the initiator(s) is/are subsequently added.

4. A process as claimed in claim 3, **characterized in that** the titanium, manganese and/or zirconium salt(s) of the olefinically unsaturated carboxylic acid is/are produced in situ, the corresponding metal oxides, hydroxides, alcoholates, carbonates and/or β-dicarbonyl compounds being dissolved in the optionally heated carboxylic acid(s).

5. A process for coating metallic materials, **characterized by** the following essential steps:
- cleaning and degreasing of the steel strip,
- rinsing of the surface,
- coating of the surface with the composition claimed in at least one of the preceding claims in a layer thickness of 0.1 to 10 µm, preferably 0.5 to 5 µm and more preferably 1 to 3 µm,
- curing of the coating by thermal polymerization, photopolymerization and/or electron beam polymerization.

6. A process for coating electrolytically galvanized steel strip or hot-dip-galvanized steel strip, **characterized by** the following essential steps:
- cleaning and degreasing of the steel strip,
- rinsing of the surface,
- coating of the surface with the composition claimed in at least one of the preceding claims in a layer thickness of 0.1 to 10 µm, preferably 0.5 to 5 µm and more preferably 1 to 3 µm,
- curing of the coating by thermal polymerization, photopolymerization and/or electron beam polymerization.

## Revendications

1. Composition polymérisable pour l'enduction organique en continu de matériaux métalliques, contenant
- au moins un sel de titane, de manganèse et/ou de zirconium d'un acide carboxylique polymérisable à insaturation oléfinique
- au moins un comonomère supplémentaires à insaturation oléfinique choisi parmi le groupe comprenant l'acide acrylique, l'acide méthacrylique, l'acide itaconique, l'acide crotonique, l'acide maléique, des demi-esters d'acide maléique, l'acide fumarique, des demi-esters d'acide fumarique, des macromonomères contenant des groupes carboxyle réactifs, le (méth)acrylate d'hydroxyéthyle, le (méth)acrylate d'hydroxy-propyle, le (méth)acrylate d'hydroxybutyle, des (méth)acrylates d'alkyle en C₁-C₈, ou leurs mélanges, la fraction des (méth)acrylates d'alkyle représentant moins de 50 % des comonomères à fonctionnalité carboxyle et/ou à fonctionnalité hydroxyle
- au moins un initiateur pour la polymérisation radicalaire, la composition étant essentiellement exempte de solvants organiques.

2. Composition selon la revendication 1, **caractérisée en ce qu'**au moins un initiateur peut être activé par exposition à un rayonnement.

3. Procédé pour la préparation des compositions selon l'une quelconque des revendications précédentes, **caractérisé en ce qu'**on mélange les monomères, le cas échéant en ajoutant des stabilisateurs, tout en agitant, les uns avec les autres, jusqu'à ce que l'on obtienne une homogénéité, et on ajoute ensuite le ou les initiateurs.

4. Procédé selon la revendication 3, **caractérisé en ce qu'**on génère in situ le ou les sels de titane, de manganèse et/ou de zirconium des acides carboxyliques à insaturation oléfinique, les oxydes métalliques, des hydroxydes métalliques, les alcoolates métalliques, les carbonates métalliques et/ou les composés β-dicarbonyle correspondants étant dissous dans l'acide ou dans les acides carboxyliques, le cas échéant par réchauffement.

5. Procédé pour revêtement en continu de matériaux métalliques,
**caractérisé par** les étapes essentielles ci-après consistant à
- nettoyer et dégraisser l'acier en ruban,
- rincer la surface,
- enduire la surface avec une composition selon au moins une des revendications précédentes, avec une épaisseur de couche de 0,1 à 10 µm, de préférence de 0,5 à 5 µm, de manière particulièrement préférée de 1 à 3 µm,
- durcir l'enduction par polymérisation thermique, par photopolymérisation et/ou à l'aide d'une polymérisation par faisceaux électroniques.

6. Procédé pour revêtement en continu d'acier en ruban galvanisé par voie électrolytique ou dans le procédé d'immersion en fusion, **caractérisé par** les étapes essentielles ci-après consistant à
- nettoyer et dégraisser l'acier en ruban,
- rincer la surface,
- enduire la surface avec une composition selon au moins une des revendications précédentes, avec une épaisseur de couche de 0,1 à 10 µm, de préférence de 0,5 à 5 µm, de manière particulièrement préférée de 1 à 3 µm,
- durcir l'enduction par polymérisation thermique, par photopolymérisation et/ou à l'aide d'une polymérisation par faisceaux électroniques.
